# EUROPÄISCHE PATENTANMELDUNG

(11) **EP 1 420 199 A1**
(43) Veröffentlichungstag der Anmeldung: **19.05.2004**
(21) Anmeldenummer: 03023138.5
(22) Anmeldetag: 10.10.2003
(51) Int. Cl.: F16L 11/118

(54) **Verbundrohr**

(30) Priorität: 12.11.2002 DE 10252573
(71) Anmelder: Fränkische Rohrwerke Gebr. Kirchner GmbH + Co KG, 97486 Königsberg/Bayern (DE)
(72) Erfinder: Giapapas, Sokrates, 01987 Schwarzheide (DE); Kess, Manfred, 97486 Königsberg (DE); Mohr, Steffen, 99510 Appolda (DE)
(74) Vertreter: Herzog, Markus, Dipl.-Phys. Dr.

(57) **Zusammenfassung**

Die Erfindung betrifft ein Verbundrohr (10) mit einem gewellten Außenrohr (12) und einem Innenrohr (14) aus einem Polymer-Elastomer-Gemisch, welche zumindest im Bereich der Wellentäler (12a) des Außenrohrs (12) miteinander verbunden sind, wobei das Polymer-Elastomer-Gemisch erfindungsgemäß ein Gleitmittel enthält.

## Beschreibung

Die Erfindung betrifft ein Verbundrohr mit einem gewellten Außenrohr und einem Innenrohr aus einem Polymer-Elastomer-Gemisch, wobei das Innenrohr und das Außenrohr zumindest im Bereich der Wellentäler des Außenrohrs miteinander verbunden sind.

Verbundrohre mit einem gewellten Außenrohr und einem mehr oder weniger glatten bzw. leicht gewellten Innenrohr werden sowohl als Stangen- als auch als Rollenware hergestellt. Das Innenrohr und das Außenrohr sind dabei an den Berührungspunkten durch die Prozesswärme miteinander verbunden. Beim Biegen solcher Rohre bzw. beim Aufwickeln der Rohre wölbt sich das Innenrohr zwischen den beiden Wellenbergen des Außenrohrs nach innen bzw. nach außen, so dass die Gesamtrauhigkeit des Rohrs im Biegebereich vergrößert wird. Diese erhöhte Rauhigkeit erhöht beim Durchfluss von gasförmigen und insbesondere flüssigen Medien nicht nur den Durchflusswiderstand des Rohrs, sondern begünstigt überdies die Bildung von Ablagerungen bzw. Versinterungen an der Rohrinnenwand.

Grundsätzlich könnte der Erhöhung der Rauhigkeit zwar durch eine dickere Ausbildung des Innenrohrs entgegengewirkt werden. Dadurch würde gleichzeitig jedoch auch die Flexibilität bzw. Biegbarkeit des Rohrs verschlechtert werden.

Aus der gattungsbildenden EP 0 302 061 B1 ist es daher bekannt, das Innenrohr aus einem Polymer-Elastomer-Gemisch zu fertigen, etwa aus einem Polyethylen-EPDM-Gemisch, wie es beispielsweise unter der Handelsbezeichnung "Santoprene" vertrieben wird. Das Innenrohr derartiger Verbundrohre verfügt über eine elastische Wandung, die beim Biegen des Verbundrohrs gedehnt oder gestaucht werden kann, ohne dass sie sich insbesondere beim Stauchen allzu sehr nach außen bzw. nach innen wölbt. Es hat sich jedoch gezeigt, dass die Herstellung dieser gattungsgemäßen Verbundrohre problematisch ist, da das Innenrohr dazu neigt, auf dem Kühldorn der Herstellungsanlage kleben zu bleiben.

Zur Lösung des letztgenannten Problems wurde in der EP 0 417 184 B1 vorgeschlagen, die Innenwandung des Innenrohrs mit einer zusätzlichen Schicht aus Polyethylen auszukleiden. Hierdurch verkompliziert sich die Fertigung aber beträchtlich, da neben dem Außenrohr und dem Innenrohr noch eine dritte Schicht extrudiert werden muss.

Demgegenüber ist es Aufgabe der Erfindung, ein Verbundrohr der eingangs genannten Art anzugeben, welches in einfacher Weise und problemlos in einer herkömmlichen Extrusionsanlage hergestellt werden kann.

Diese Aufgabe wird erfindungsgemäß durch ein Verbundrohr der eingangs genannten Art gelöst, bei welchem das Polymer-Elastomer-Gemisch ein Gleitmittel enthält. Durch das Zumischen des Gleitmittels, das beispielsweise ein Polyethylenwachs sein kann, zu dem Polymer-Elastomer-Gemisch erhält man ein elastisches Innenrohr aus einem selbstgleitenden Material, wodurch das Problem des Anhaftens des Innenrohrs auf dem Kühldorn der Extrusionsanlage nicht auftritt. Darüber hinaus erübrigt sich durch die Beimengung von Gleitmittel zu dem Polymer-Elastomer-Gemisch die zusätzliche Anbringung einer inneren Gleitschicht, wie sie beispielsweise aus der EP 0 417 184 B1 bekannt ist. Ferner behält das Innenrohr trotz der Beimengung des Gleitmittels seine elastischen Eigenschaften, d.h. es ergeben sich beim Biegen des Rohrs allenfalls geringfügige Aufwölbungen des Innenrohrs, so dass es nur eine geringe Rauhigkeit aufweist.Dies ist beim Durchfluss von gasförmigen und insbesondere flüssigen Medien nicht nur hinsichtlich des Durchflusswiderstands, sondern beim Durchfluss von flüssigen Medien auch hinsichtlich der Bildung von Ablagerungen bzw. Versinterungen von Vorteil.

Um einerseits ein in ausreichendem Maße selbstgleitend ausgebildetes Innenrohr bereitstellen zu können, andererseits aber auch dessen Elastizität nicht zu beeinträchtigen, wird vorgeschlagen, dass der Anteil des Gleitmittels, vorzugsweise des Polyethylenwachses, an dem Polymer-Elastomer-Gemisch zwischen etwa 0,5 Gew.-% und etwa 15 Gew.-%, vorzugsweise etwa 10 Gew.-% beträgt. Als Polymermaterial kann das Polymer-Elastomer-Gemisch Polyethylen oder/und Polypropylen oder/und Polyvinylchlorid enthalten, während es als Elastomermaterial EPDM enthalten kann.

Insbesondere können die Eigenschaften des Verbundrohres durch die Zugabe von Polyethylen oder/und Polypropylen oder/und Polyvinylchlorid zum Polymer-Elastomer-Gemisch je nach Verwendungszweck des damit produzierten Verbundrohres verändert werden.

In herstellungstechnisch einfacher Weise kann das Polymer-Elastomer-Gemisch ausgehend von einer unter der Handelsbezeichnung "Santoprene" erhältlichen Polyethylen-EPDM-Mischung durch Beimengen von Gleitmittel und gewünschtenfalls auch von Polyethylen gefertigt sein.

Das gewellte Außenrohr kann beispielsweise aus einem Polymermaterial gefertigt sein, was zu einem relativ stabilen Aufbau des Außenrohrs und somit des gesamten Verbundrohrs führt. Dabei kann das Polymermaterial Polyethylen oder/und Polypropylen oder/und Polyvinylchlorid umfassen.

In Anwendungsbereichen, bei denen die auf das Verbundrohr von außen einwirkende Belastung gering ist, kann aber auch das Außenrohr aus einem Polymer-Elastomer-Gemisch gefertigt sein. Dabei können für die Herstellung von Innenrohr und Außenrohr das gleiche Polymer-Elastomer-Gemisch oder auch verschiedene Polymer-Elastomer-Gemische verwendet werden. Insbesondere kann dem Polymer-Elastomer-Gemisch des Außenrohrs ebenfalls ein Gleitmittel zugesetzt werden, auch wenn dieser Gleitmittelzusatz nicht unbedingt erforderlich ist.

Zur Erzielung eines geringen Durchflusswiderstands sowie einer geringen Ablagerungs- oder/und Versinterungsneigung des Innenrohrs wird vorgeschlagen, dass das Innenrohr ein Zylinderrohr mit im Wesentlichen glatter Oberfläche ist.

Wenn das Verbundrohr im Bereich wenigstens eines Teils der Wellentäler des Außenrohrs Durchbrechungen, vorzugsweise Schlitze, aufweist, so kann es beispielsweise im Tunnelbau oder in Böden, welche zur Versinterung neigenende Mineralien enthalten, als Sickerrohr eingesetzt werden. Durch das elastische und somit weiche und nachgiebige Innenrohr wird im Bereich der Durchbrechungen die Neigung zur Bildung von Ablagerungen bzw. Versinterungen kleiner gehalten. Beim Austritt bzw. Eintritt von Flüssigkeit durch die Durchbrechungen kommt es nämlich zu geringfügigen Bewegungen des Umfangsrands dieser Durchbrechungen, welche das Abplatzen von bereits gebildeten Ablagerungen bzw. Versinterungen erleichtern.

Insbesondere beim Einsatz geschlitzter Verbundrohre im Tunnelbau kommt es beim Eintritt kalkhaltigen Wassers durch die Schlitze zu Versinterungen an und in den Schlitzen sowie auch im Rohrinneren. Daher müssen die Verbundrohre regelmäßig mit Hochdruckspülgeräten gespült oder mechanisch mit Schleuderketten und dergleichen gereinigt werden. Die genannten Ablagerungen bzw. Versinterungen sind in der Regel aber sehr hartnäckig, so dass entsprechend hohe Drücke eingesetzt werden müssen. Diese können aber nicht nur die Verkrustungen entfernen, sondern auch das Rohr beschädigen. Bei dem erfindungsgemäßen Verbundrohr ist in diesem Zusammenhang vorteilhaft, dass das elastische Material des Innenrohrs dem hohen Spüldruck ausweichen kann und sich somit eine insgesamt geringere Beanspruchung des Verbundrohrs ergibt. Auch beim Einsatz mechanischer Reinigungsgeräte führt die höhere Elastizität des Innenrohrs zu einem geringeren Beschädigungsrisiko der Verbundrohre.

Sind sowohl das Innenrohr als auch das Außenrohr aus einem Polymer-Elastomer-Gemisch gefertigt, so kann bei der Hochdruckspülung eine Erhöhung der Eigenvibration der Innenwand des Verbundrohrs erzielt werden. Hierdurch können auch hartnäckige Ablagerungen bzw. Versinterungen leichter entfernt werden. Im Gegenzug bedeutet dies aber auch, dass im Normalfall mit geringerem Spüldruck gearbeitet werden kann, wodurch die Beanspruchung des Rohrs beim Spülen verringert werden kann, was zu einer höheren Lebensdauer des Verbundrohrs führt.

Die Erfindung wird im Folgenden an einem Ausführungsbeispiel anhand der beigefügten Zeichnungen näher erläutert werden. Es stellt dar:

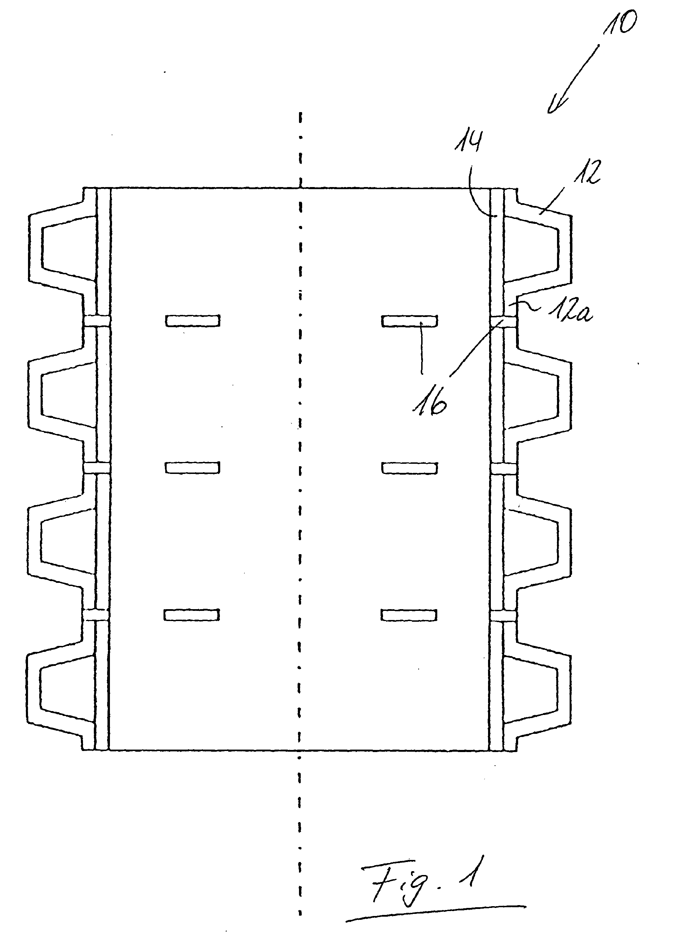

- Fig. 1: einen Teilschnitt eines erfindungsgemäßen Verbundrohrs.

In Fig. 1 ist ein erfindungsgemäßes Verbundrohr allgemein mit 10 bezeichnet. Es umfasst ein gewelltes Außenrohr 12 und ein im Wesentlichen zylindrisches Innenohr 14. Das Außenrohr 12 und das Innenrohr 14 können in an sich bekannter Weise koextrudiert werden und verbinden sich im Bereich der Wellentäler 12a des Außenrohrs 12 auf Grund der Prozesswärme.

Das Außenrohr 12 kann beispielsweise aus einem Polymermaterial gebildet sein, beispielsweise Polyethylen, Polypropylen oder Polyvinylchlorid, während das Innenrohr 14 aus einem Polymer-Elastomer-Gemisch gefertigt ist, welchem erfindungsgemäß zusätzlich ein Gleitmittel, beispielsweise ein Polyethylenwachs, beigemengt ist.

Es ist jedoch ebenso möglich, sowohl das Außenrohr 12 als auch das Innenrohr 14 aus einem Polymer-Elastomer-Gemisch zu fertigen.

Als Polymer-Elastomer-Gemisch kommt vorzugsweise eine Polyethylen-EPDM-Mischung zum Einsatz. Beispielsweise kann von einer unter der Handelsbezeichnung Santoprene erhältlichen Polyethylen-EPDM-Mischung ausgegangen werden, und dieser Mischung zumindest im Falle des Innenrohrs 14 das Gleitmittel und gewünschtenfalls zusätzliches Polyethylen beigemengt werden.

Soll das erfindungsgemäße Verbundrohr als Sickerrohr eingesetzt werden, so können nach dem Abkühlen von Außenrohr 12 und Innenrohr 14 im Bereich der Wellentäler 1 2a des Außenrohrs 12 noch Durchbrechungen 16 eingebracht werden, beispielsweise durch Schneiden, Fräsen, Stanzen oder dergleichen.

## Patentansprüche

1. Verbundrohr (10) mit einem gewellten Außenrohr (12) und einem Innenrohr (14) aus einem Polymer-Elastomer-Gemisch, wobei das Außenrohr (12) und das Innenrohr (14) zumindest im Bereich der Wellentäler (12a) des Außenrohrs (12) miteinander verbunden sind,
**dadurch gekennzeichnet, dass** das Polymer-Elastomer-Gemisch ein Gleitmittel enthält.

2. Verbundrohr (10) nach Anspruch 1,
**dadurch gekennzeichnet, dass** das Gleitmittel ein Polyethylenwachs ist.

3. Verbundrohr (10) nach Anspruch 1 oder 2,
**dadurch gekennzeichnet, dass** der Anteil des Gleitmittels, vorzugsweise des Polyethylenwachses, an dem Polymer-Elastomer-Gemisch zwischen etwa 0,5 Gew.-% und etwa 15 Gew.-%, vorzugsweise etwa 10 Gew.-% beträgt.

4. Verbundrohr (10) nach einem der Ansprüche 1 bis 3,
**dadurch gekennzeichnet, dass** das Polymer-Elastomer-Gemisch Polyethylen oder/und Polypropylen oder/und Polyvinylchlorid als Polymermaterial enthält.

5. Verbundrohr (10) nach einem der Ansprüche 1 bis 4,
**dadurch gekennzeichnet, dass** das Polymer-Elastomer-Gemisch EPDM als Elastomermaterial enthält.

6. Verbundrohr (10) nach einem der Ansprüche 1 bis 5,
**dadurch gekennzeichnet, dass** das Polymer-Elastomer-Gemisch ausgehend von einer unter der Handelsbezeichnung "Santoprene" erhältlichen Polyethylen-EPDM-Mischung durch Beimengen von Gleitmittel und gewünschtenfalls Polyethylen gefertigt ist.

7. Verbundrohr (10) nach einem der Ansprüche 1 bis 6,
**dadurch gekennzeichnet, dass** das Außenrohr (12) aus einem Polymermaterial gefertigt ist.

8. Verbundrohr (10) nach Anspruch 7,
**dadurch gekennzeichnet, dass** das Polymermaterial des Außenrohrs (12) Polyethylen oder/und Polypropylen oder/und Polyvinylchlorid umfasst.

9. Verbundrohr (10) nach einem der Ansprüche 1 bis 6,
**dadurch gekennzeichnet, dass** auch das Außenrohr (12) aus einem Polymer-Elastomer-Gemisch gefertigt ist.

10. Verbundrohr (10) nach einem der Ansprüche 1 bis 9,
**dadurch gekennzeichnet, dass** das Innenrohr (14) ein Zylinderrohr mit im Wesentlichen glatter Oberfläche ist.

11. Verbundrohr (10) nach einem der Ansprüche 1 bis 10,
**dadurch gekennzeichnet, dass** es im Bereich wenigstens eines Teils der Wellentäler (12a) des Außenrohrs (12) Durchbrechungen (16), vorzugsweise Schlitze, aufweist.

12. Verwendung eines Verbundrohrs (10) mit einem gewellten Außenrohr (12) und einem Innenrohr (14) aus einem Polymer-Elastomer-Gemisch, welche im Bereich zumindest eines Teils der Wellentäler (12a) des Außenrohrs (12) miteinander verbunden und mit Durchbrechungen (16), vorzugsweise Schlitzen, versehen sind, als Sickerrohr im Tunnelbau oder in Böden, welche zur Versinterung neigende Mineralien enthalten.
